# DEMANDE DE BREVET EUROPEEN

(11) **EP 3 163 105 A1**
(43) Date de publication de la demande: **03.05.2017**
(21) Numéro de dépôt: 16196173.5
(22) Date de dépôt: 28.10.2016
(51) Int. Cl.: F16C 35/06, F16C 43/04, F16C 33/60, F16C 19/38

(54) **BAGUE D'ASSEMBLAGE ET PALIER DE GUIDAGE A DEUX BAGUES INTERIEURES, EQUIPE D'UNE TELLE BAGUE D'ASSEMBLAGE**

(30) Priorité: 28.10.2015 FR 1560334
(71) Demandeur: NTN-SNR Roulements, 74000 Annecy (FR)
(72) Inventeur: MAILLE, Renaud, 74000 Annecy (FR); MAROT, Pierre-Yves, 74210 FAVERGES (FR)
(74) Mandataire: Alatis

(57) **Abrégé**

Un palier de guidage tournant (10), comporte deux bagues intérieures (18, 20) disposées bout à bout et présentant chacune une paroi d'épaulement (50, 52), et une bague d'assemblage (54) présentant deux épaulements (66, 68) disposée de manière à ce que les parois d'épaulement (50, 52) soient situées entre les épaulements (66, 68), chacune directement en regard de l'un des épaulements (66, 68). La bague d'assemblage (54) est ouverte et comporte deux portions d'extrémité (70, 72) en regard l'une de l'autre, qui présentent des formes de verrouillage (74, 76, 78, 80, 82, 84) telles que lorsque la bague d'assemblage (54) se déforme d'une position nominale d'assemblage à une position de coincement en réduisant son diamètre, les portions d'extrémité (70, 72) se rapprochent l'une de l'autre jusqu'à venir se coincer mutuellement dans la position de coincement de manière à empêcher une réduction du diamètre apparent de la bague d'assemblage (54) en deçà d'un diamètre de sécurité prédéterminé.

## Description

### DOMAINE TECHNIQUE DE L'INVENTION

L'invention se rapporte à l'assemblage de deux bagues intérieures d'un roulement ou d'un palier lisse, destinées à être positionnées bout à bout sur un tronçon d'arbre ou de pivot, notamment, bien que de manière non exclusive, dans une application au guidage en rotation d'une roue de véhicule automobile.

### ETAT DE LA TECHNIQUE ANTERIEURE

Dans le document DE 100 64 831 est décrit un roulement de roue à deux bagues intérieures positionnées bout à bout. Chaque bague intérieure comporte un chemin de roulement tourné radialement vers l'extérieur et une gorge d'assemblage tournée radialement vers l'intérieur. Le roulement comporte en outre une bague extérieure 12 unique à deux chemins de roulement, et deux rangées de corps roulants circulant sur les chemins de roulement. Pour assurer la cohésion des deux bagues intérieures dans les phases de montage et de démontage du roulement ou de la roue associée, est prévue une bague d'assemblage insérée dans les gorges d'assemblage des deux bagues intérieures. La bague d'assemblage est une bague ouverte constituée par une bande de matière élastiquement déformable enroulée sur elle-même, définissant un axe de référence, et formant au moins un premier épaulement situé dans un premier plan géométrique perpendiculaire à l'axe de référence et tourné dans une première direction axiale pour prendre appui contre une paroi de la gorge d'assemblage de l'une des bagues intérieures, et un deuxième épaulement situé dans un deuxième plan géométrique parallèle au premier plan géométrique et distant du premier plan géométrique, le deuxième épaulement étant tourné dans une deuxième direction axiale opposée à la première direction axiale pour prendre appui contre une paroi de la gorge d'assemblage de l'autre bague intérieure. La bague d'assemblage comporte en outre deux portions d'extrémité en regard l'une de l'autre, et est déformable élastiquement par mouvement plan parallèle au premier plan géométrique au moins d'une position nominale d'assemblage à une position de coincement par rapprochement des deux portions d'extrémité induisant une diminution d'un diamètre apparent de la bague d'assemblage. Dans le cadre de la présente demande, on désigne par mouvement plan un mouvement de déformation par lequel les parties déformées se déplacent parallèlement à un plan fixe prédéterminé.

Lors des phases de démontage des roues, les bagues intérieures sont sollicitées de manière non maîtrisée et tendent à se désaxer l'une par rapport à l'autre. La bague d'assemblage, qui est censée s'opposer à cette désolidarisation des bagues intérieures, est alors très sollicitée. On constate en pratique deux types de défauts: soit le roulement se démonte, et doit être remplacé, soit la bague d'assemblage sort momentanément d'une des gorges puis revient s'y positionner, ce qui n'est pas perceptible immédiatement par l'utilisateur. Dans cette dernière hypothèse, les bagues intérieures ont été momentanément fortement désaxées, puis sont revenues en position. Ce désaxage transitoire peut conduire notamment à des défaillances des joints d'étanchéité associés au roulement, puis du roulement lui-même.

### EXPOSE DE L'INVENTION

L'invention vise à remédier aux inconvénients de l'état de la technique et à proposer des moyens pour éviter le désaxage des bagues intérieures lors des phases de montage ou de démontage d'un ensemble constitué par deux bagues intérieures.

Pour ce faire est proposée, selon un premier aspect de l'invention, une bague d'assemblage ouverte constituée par une bande de matière élastiquement déformable enroulée autour d'un axe de référence, et formant au moins un premier épaulement situé dans un premier plan géométrique perpendiculaire à l'axe de référence et tourné dans une première direction axiale, un deuxième épaulement situé dans un deuxième plan géométrique parallèle au premier plan géométrique et distant du premier plan géométrique, le deuxième épaulement étant tourné dans une deuxième direction axiale opposée à la première direction axiale, la bague d'assemblage comportant deux portions d'extrémité en regard l'une de l'autre, la bague d'assemblage étant déformable élastiquement par mouvement plan parallèle au premier plan géométrique au moins d'une position nominale d'assemblage à une position de coincement par rapprochement des deux portions d'extrémité induisant une diminution d'un diamètre apparent de la bague d'assemblage, caractérisée en ce que chaque portion d'extrémité comporte des formes de verrouillage telles que lorsque la bague d'assemblage passe de la position nominale d'assemblage à la position de coincement, les portions d'extrémité se rapprochent l'une de l'autre jusqu'à venir se coincer mutuellement dans la position de coincement de manière à empêcher une réduction du diamètre apparent de la bague d'assemblage en deçà d'un diamètre de sécurité prédéterminé.

On a en effet observé sur banc d'essai que lorsqu'on maintient une bague intérieure tout en appliquant sur l'autre bague intérieure un effort dans un plan transversal ou un couple autour d'un axe situé dans un plan transversal, la bague d'assemblage de l'état de la technique se recroqueville et les portions d'extrémité de la bague d'assemblage coulissent l'une sur l'autre en se chevauchant, sans s'opposer à la diminution de diamètre de la bague d'assemblage dont résultent les problèmes rencontrés avec l'état de la technique antérieure. Les formes de verrouillage selon l'invention constituent des butées qui s'opposent à la réduction du diamètre de la bague d'assemblage en deçà du diamètre de sécurité, et solidarisent momentanément l'une à l'autre les portions d'extrémité de la bague d'assemblage. La déformation de la bague d'assemblage de la position nominale d'assemblage à la position de coincement est une déformation élastique, de préférence réalisée par un mouvement plan parallèle au premier plan de référence.

De manière préférentielle, les deux portions d'extrémité comportent un ou plusieurs premiers jeux de surfaces de guidage tendant à guider une première des deux portions d'extrémité radialement vers l'extérieur et la deuxième des deux portions d'extrémité radialement vers l'intérieur lorsque les deux portions d'extrémité sont sollicitées vers la position de coincement et un ou plusieurs deuxièmes jeux de surfaces de guidage tendant à guider la première des deux portions d'extrémité radialement vers l'intérieur et la deuxième des deux portions d'extrémité radialement vers l'extérieur lorsque les deux portions d'extrémité sont sollicitées vers la position de coincement. De l'antagonisme entre le premier jeu de surfaces de guidage et le deuxième jeu de surfaces de guidage résulte un blocage radial des deux portions d'extrémité l'une par rapport à l'autre, de sorte à empêcher un chevauchement des deux portions d'extrémité.

Suivant un mode de réalisation particulièrement avantageux, chaque portion d'extrémité comporte un premier nombre des premier jeux de surfaces de guidage guidage, et un deuxième nombre des deuxièmes jeux de surfaces de guidage, la somme du premier nombre et du deuxième nombre étant impaire. Les premiers jeux de surfaces de guidage alternent avec les deuxièmes jeux de surface de guidage dans le sens axial. Cette disposition permet d'éviter de vriller la bague d'assemblage lorsqu'elle est sollicitée vers la position de coincement. Lorsque la bague d'assemblage à une faible dimension axiale, il peut s'avérer préférable de ne prévoir qu'un jeu de premières surfaces de guidage et un jeu de deuxièmes surface de guidage.

Suivant un mode de réalisation, le ou les premiers et le ou les deuxièmes jeux de surfaces de guidage comportent des faces en biseau. Les surfaces en biseau constituent des rampes qui guident les extrémités radialement vers l'intérieur ou l'extérieur. De préférence l'une des portions d'extrémité comporte au moins deux surfaces en biseau tournées l'une radialement vers l'intérieur et l'autre radialement vers l'extérieur. Le nombre de surfaces en biseau peut être supérieur à deux, paire ou impaire.

Suivant un mode de réalisation, le ou les premiers et le ou les deuxièmes jeux de faces de guidage comportent des parties pliées des première et deuxième portions d'extrémité. Les portions pliées constituent des rampes qui guident les extrémités radialement vers l'intérieur ou l'extérieur. De préférence l'une des portions d'extrémité comporte au moins deux portions pliées tournées l'une radialement vers l'intérieur et l'autre radialement vers l'extérieur. Le nombre de portions pliées peut être supérieur à deux, paire ou impaire. On peut éventuellement combiner surfaces en biseau et portions pliées.

Suivant un mode de réalisation la bague d'assemblage est déformable élastiquement au moins de la position nominale d'assemblage à une position de montage par déplacement d'une des deux portions d'extrémité radialement vers l'intérieur par rapport à l'autre des deux portions d'extrémité, la bague d'assemblage ayant dans la position de montage un diamètre apparent inférieur au diamètre de sécurité. Il est ainsi possible, à l'aide d'un outil de forcer la bague d'assemblage à passer de la position nominale d'assemblage à la position de montage, en décalant suffisamment les deux extrémités l'une par rapport à l'autre dans le sens radial, notamment lors du montage de la bague d'assemblage pour assembler entre elles deux bagues intérieures de palier. L'existence de cette position de montage ne rend pas la bague d'assemblage moins performante dans les conditions de démontage évoquées précédemment, car les sollicitations sur la bague d'assemblage lorsque les efforts appliqués sur les bagues sont uniquement ceux transmis par les bagues intérieures n'ont pas tendance à décaler radialement l'une par rapport à l'autre les portions d'extrémité de la bague d'assemblage.

De préférence, la bague d'assemblage est déformable élastiquement de la position nominale d'assemblage à la position de montage par un mouvement plan parallèle au premier plan de référence.

Alternativement, on peut envisager que la bague d'assemblage soit déformable élastiquement au moins de la position nominale d'assemblage à une position de montage par déplacement d'une des deux portions d'extrémité axialement vers l'extérieur par rapport à l'autre des deux portions d'extrémité, de manière à former une spire hélicoïdale ayant dans la position de montage un diamètre apparent inférieur au diamètre de sécurité.

Suivant un autre aspect de l'invention, celle-ci a trait à un palier de guidage tournant comportant deux bagues intérieures disposées bout à bout et présentant chacune au moins un chemin de guidage annulaire tourné radialement vers l'extérieur et une paroi d'épaulement, comportant une bague d'assemblage telle que décrite précédemment, disposée de manière à ce que les parois d'épaulement soient situées entre les épaulements, chacune axialement directement en regard de l'un des épaulements, dans la position nominale d'assemblage et dans la position de coincement. La bague d'assemblage assure la cohésion des deux bagues intérieures dans les phases d'assemblage, de manipulation, de montage et de démontage du palier en venant pincer les deux parois d'épaulement. On peut prévoir un léger jeu entre les parois d'épaulement et les épaulements ou au contraire une légère interférence, pour assurer en toute circonstance un effort de contact axial entre les épaulements et les parois d'épaulement. Si un jeu axial est présent entre les épaulements et les parois d'épaulement, ce jeu axial est de préférence suffisamment faible pour que les parois d'épaulement guident le mouvement plan de la bague d'assemblage parallèle au premier plan géométrique de la position nominale d'assemblage à la position de coincement.

Suivant un mode de réalisation chacune des bagues intérieures comporte une gorge d'assemblage tournée radialement vers l'intérieur et formant une des parois d'épaulement. De préférence, au moins une des deux bagues intérieures présente une portée intérieure cylindrique ayant un diamètre inférieur à un diamètre intérieur de la bague d'assemblage insérée dans la gorge d'assemblage de chacune des deux bagues intérieures. La bague d'assemblage se trouve donc en retrait par rapport à la portée cylindrique intérieure d'au moins une des bagues intérieures, et donc protégée et guidée lorsque des efforts de désaxage sont exercés sur les bagues intérieures.

Suivant un mode de réalisation, le palier comporte en outre une bague extérieure de guidage comportant au moins deux chemins de guidage tournés radialement vers l'intérieur, l'un des deux chemins de guidage de la bague extérieure étant associé à l'une des deux bagues intérieures et situé en regard du chemin de guidage de la bague intérieure associée, l'autre des deux chemins de guidage de la bague extérieure étant associé à l'autre des deux bagues intérieures et situé en regard du chemin de guidage de la bague intérieure associée. Mais on peut également appliquer l'invention à un palier de guidage à deux bagues extérieures, chacune associée à l'une des bagues intérieures, et chacune présentant un chemin de guidage situé en regard du chemin de guidage de la bague associée.

Suivant un mode de réalisation, le chemin de guidage annulaire de chacune des deux bagues intérieures est un chemin de roulement sur lequel roulent des corps roulants du palier de guidage. Suivant un mode de réalisation alternatif, le palier est un palier lisse, les chemins de guidage de la bague intérieure étant dans cette hypothèse des chemins de glissement, qui peuvent glisser directement sur des chemins de glissement d'une ou deux bagues extérieures, ou être guidés par rapport à une ou deux bagues extérieures avec interposition d'une garniture de glissement. Suivant encore un autre mode de réalisation, le palier est un palier mixte, le chemin de guidage de l'une des bagues intérieures étant un chemin de roulement, et le chemin de guidage de l'autre bague intérieure étant un chemin de glissement.

Suivant un autre aspect de l'invention, celle-ci a trait à un palier de guidage tournant comportant deux bagues intérieures disposées bout à bout et présentant chacune une paroi d'épaulement, et une bague d'assemblage présentant deux épaulements disposés de manière à ce que dans une position nominale d'assemblage, les parois d'épaulement soient situées entre les épaulements, chacune axialement directement en regard de l'un des épaulements dans la position nominale d'assemblage et dans la position de coincement. La bague d'assemblage est ouverte et comporte deux portions d'extrémité en regard l'une de l'autre, qui présentent des formes de verrouillage telles que lorsque la bague d'assemblage se déforme de la position nominale d'assemblage à une position de coincement en réduisant son diamètre, les portions d'extrémité se rapprochent l'une de l'autre jusqu'à venir se coincer mutuellement dans la position de coincement de manière à empêcher une réduction du diamètre apparent de la bague d'assemblage en deçà d'un diamètre de sécurité prédéterminé. Le diamètre de sécurité est tel que dans la position de coincement, les parois d'épaulement sont toujours situées entre les épaulements, chacune directement en regard de l'un des épaulements, ceci même dans les conditions des jeux les plus défavorables.

### BREVE DESCRIPTION DES FIGURES

D'autres caractéristiques et avantages de l'invention ressortiront à la lecture de la description qui suit, en référence aux figures annexées, qui illustrent :
- la figure 1, une vue en coupe d'un palier à roulement comportant une bague d'assemblage selon un premier mode de réalisation de l'invention;
- la figure 2, une vue en perspective cavalière du palier à roulement de la figure 1;
- la figure 3, un détail de la figure 2, illustrant des portions d'extrémité de la bague d'assemblage, dans une position nominale d'assemblage;
- la figure 4, un détail du palier à roulement de la figure 1, illustrant les portions d'extrémité de la bague d'assemblage dans une position de coincement;
- la figure 5, une vue en perspective de la bague d'assemblage du palier de la figure 1;
- la figure 6, une vue en perspective d'une bague d'assemblage suivant un deuxième mode de réalisation de l'invention;
- la figure 7, une vue en perspective d'un palier pourvu d'une bague d'assemblage selon un troisième mode de réalisation de l'invention;
- la figure 8, un détail de la figure 7, illustrant des portions d'extrémité de la bague d'assemblage, dans une position nominale d'assemblage.

Pour plus de clarté, les éléments identiques ou similaires sont repérés par des signes de référence identiques sur l'ensemble des figures.

### DESCRIPTION DÉTAILLÉE DE MODES DE REALISATION

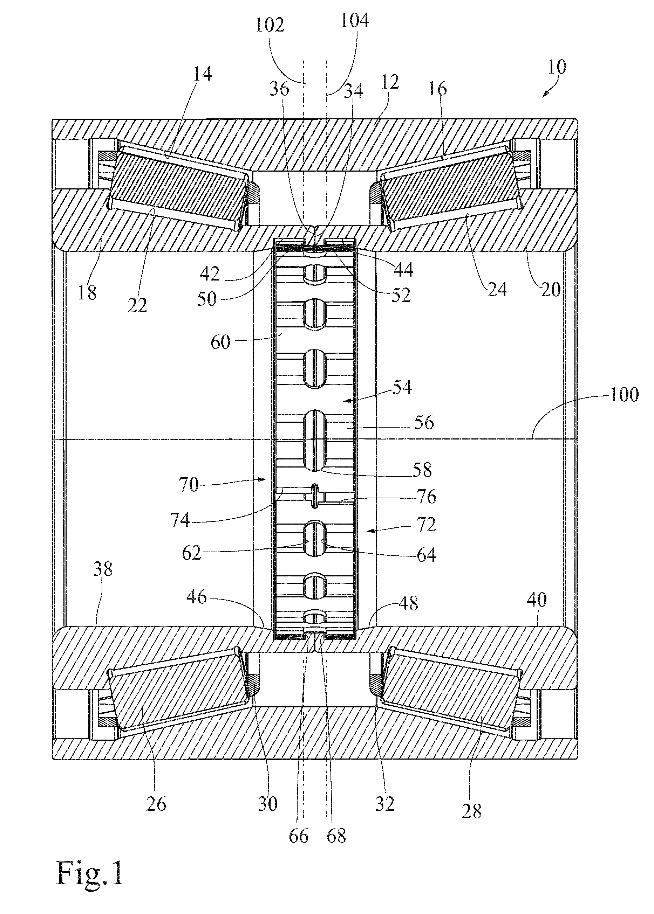

En référence aux figures **1** à **5****,** un palier **10** à roulement, par exemple pour une application au guidage en rotation d'une roue de véhicule, en particulier une roue non motrice, comporte une bague extérieure **12** à deux chemins de roulement **14**, **16** tournés radialement vers l'intérieur et distant l'un de l'autre le long d'un axe de révolution **100** du palier **10,** une première bague intérieure **18** et une deuxième bague intérieure **20** positionnées bout à bout, présentant chacune un chemin de roulement **22, 24** tourné radialement vers l'extérieur et situé en regard de l'un des deux chemins de roulement **14, 16** de la bague extérieure **12,** et deux rangées de corps roulants **26, 28,** circulant sur les chemins de roulement **14, 22, 16, 24,** et maintenus en position par deux cages **30, 32.** Les deux bagues intérieures **18, 20** sont en appui axialement l'une contre l'autre, par des faces d'extrémité **34, 36** de préférence annulaires et planes. L'axe de révolution **100** constituera un axe de référence pour la description qui va suivre des pièces constitutives du palier **10.**

Chacune des deux bagues intérieures présente une portée cylindrique **38, 40** tournée radialement vers l'intérieur, qui a été représentée lisse mais peut être texturée, et qui est destinée à permettre un frettage sur un tronçon d'arbre ou un pivot de roue. Chaque bague intérieure **18,** respectivement **20,** présente en outre une gorge d'assemblage **42,** respectivement **44,** ouverte radialement vers l'intérieur et située entre la portée cylindrique **38,** respectivement **40,** et la face d'extrémité **34,** respectivement **36,** disposée en retrait par rapport à la portée cylindrique **38,** respectivement **40,** et reliée à cette dernière par une face chanfreinée **46,** respectivement **48.** De manière remarquable, chaque gorge d'assemblage **42,** respectivement **44** forme une paroi intérieure d'épaulement **50,** respectivement **52** s'étendant radialement, tournée à l'opposée de l'autre gorge **44,** respectivement **42,** et de préférence plane.

Pour assurer la cohésion des deux bagues intérieures **18, 20** dans les phases de montage et de démontage du palier **10** ou de la roue associée, est prévue une bague d'assemblage **54** insérée dans les gorges d'assemblage **42, 44** des deux bagues intérieures. La bague d'assemblage **54** est une bague ouverte constituée par une bande de matière élastiquement déformable, de préférence métallique, enroulée autour de l'axe de référence **100** sur moins d'un tour.

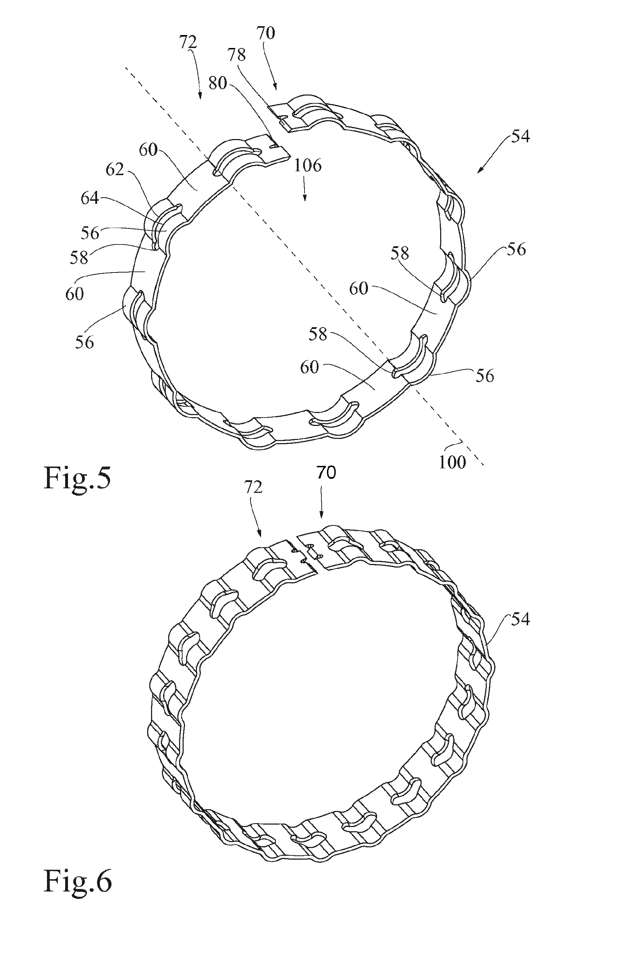

Comme illustré sur la figure **5****,** la bague d'assemblage **54** comporte des parties bombées **56** radialement vers l'extérieur et traversées par des trous **58** de forme oblongue, et des parties cylindriques pleines **60** de liaison entre les parties bombées **56.** Les trous oblongs **58** présentent chacun un premier rebord **62** situé dans un premier plan géométrique de référence **102** de la bague d'assemblage **54** perpendiculaire à l'axe de référence **100** et un deuxième rebord **64** situé dans un deuxième plan géométrique de référence **104** de la bague d'assemblage **54** perpendiculaire à l'axe de référence **100** et distant du premier plan géométrique de référence **102.** Les rebords **62** situés dans le premier plan géométrique de référence **102** constituent ensemble un premier épaulement **66** de la bague d'assemblage **54,** tourné dans une première direction axiale pour prendre appui contre la paroi **50** de la gorge d'assemblage **42** de la première bague intérieure **18.** Les rebords **64** situés dans le deuxième plan géométrique de référence **104** constituent ensemble un deuxième épaulement **68** de la bague d'assemblage **54,** tourné dans une deuxième direction axiale opposée à la première direction axiale pour prendre appui contre la paroi **52** de la gorge d'assemblage **44** de la deuxième bague intérieure **40.** Dans la position d'assemblage illustrée sur les figures **1** à **3****,** les épaulements **66, 68** sont disposés directement en regard des parois intérieures d'épaulement **50, 52** des gorges d'assemblage **42, 44,** soit avec un léger jeu d'assemblage, soit avec une légère interférence de serrage.

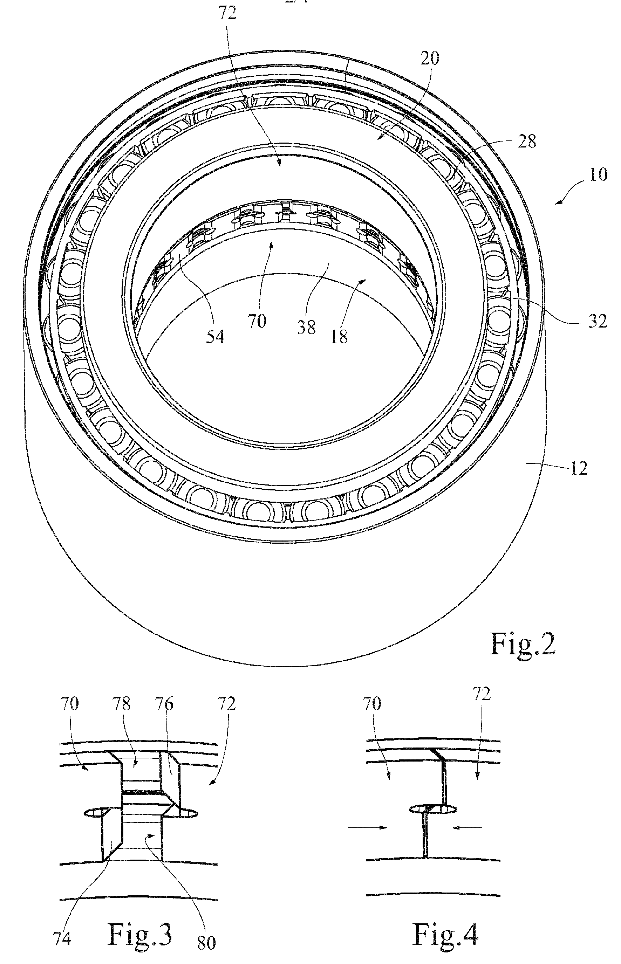

Comme illustré en détail sur les figures **3** et **4****,** la bague d'assemblage comporte en outre une première portion d'extrémité **70** et une deuxième portion d'extrémité **72** en regard l'une de l'autre, pourvues chacune de formes de verrouillage **74, 76, 78, 80** constitué dans ce mode de réalisation par des facettes biseautées. Plus précisément, chaque portion d'extrémité **70,** respectivement **72,** comporte une facette biseautée **74,** respectivement **76** tournée radialement vers l'intérieur, associée à une facette biseautée **80,** respectivement **78** tournée radialement vers l'extérieur de l'autre portion d'extrémité **72,** respectivement **70.** Lorsque la bague d'assemblage **54** se déforme et passe de la position nominale d'assemblage illustrée sur la figure **3** à une position de coincement illustrée sur la figure **4****,** les portions d'extrémité **70, 72** se rapprochent l'une de l'autre jusqu'à venir se coincer mutuellement dans la position de coincement. La facette biseautée **74** tournée radialement vers l'intérieur de la première portion d'extrémité **70** coopère avec la facette biseautée **80** tournée radialement vers l'extérieur de la deuxième portion d'extrémité **72** et tend à guider la première portion d'extrémité **70** radialement vers l'extérieur par rapport à la deuxième portion d'extrémité **72.** Simultanément, la facette biseautée **78** tournée radialement vers l'extérieur de la première portion d'extrémité **70** coopère avec la facette biseautée **76** tournée radialement vers l'intérieur de la deuxième portion d'extrémité **72** et tend à guider la première portion d'extrémité **70** radialement vers l'intérieur par rapport à la deuxième portion d'extrémité **72.** De ces sollicitations antagonistes résulte un verrouillage mutuel des deux portions d'extrémité **70, 72,** qui empêche une réduction du diamètre de la bague d'assemblage **54** en deçà d'un diamètre dit de sécurité correspondant au diamètre atteint dans la position de coincement. Les dimensions de la bague d'assemblage **54,** et notamment des rebords **62, 64,** et celles des gorges d'assemblage **42, 44,** notamment des parois intérieures d'épaulement **50, 52,** sont telles que dans la position de coincement, les rebords **62, 64** formant les épaulement **66, 68** sont encore au contact des parois intérieures d'épaulement **50, 52.**

Par ailleurs, et comme illustré sur la figure 5, la bague d'assemblage **54** est déformable élastiquement de la position nominale d'assemblage à une position de montage, par un mouvement plan parallèle au premier plan de référence de la deuxième portion d'extrémité **72** radialement vers l'intérieur (dans la direction générale de la flèche 106) par rapport à la première portion d'extrémité **70,** de sorte que la bague d'assemblage **54** peut atteindre dans la position de montage un diamètre apparent inférieur au diamètre de sécurité. Cette déformation élastique de la bague d'assemblage **54** est utilisée lors du montage de la bague d'assemblage dans les gorges d'assemblage **42, 44** des bagues intérieures **18, 20** du palier **10.** Mais on comprend qu'après le montage de la bague d'assemblage **54,** les sollicitations sur les bagues intérieures **18, 20** dans des directions non parallèles à l'axe de référence **100,** notamment lors des phases de montage ou de démontage de la roue à laquelle le palier **10** est associé, ne pourront produire cette déformation très spécifique de la bague d'assemblage **54.** En conséquence, la liberté donnée à la portion d'extrémité **72** de fléchir radialement vers l'intérieur par rapport à la portion d'extrémité **70** n'augmente pas le risque d'une désolidarisation, même transitoire, des deux bagues intérieures **18, 20** après que la bague d'assemblage **54** a été mise en place.

On a illustré sur la figure **6** une variante de réalisation des portions d'extrémité **70, 72** de la bague d'assemblage **54,** qui présentent chacune trois facettes biseautées. Les efforts entre les portions d'extrémité dans la position de coincement sont alors équilibrés, ce qui limite le risque de vrillage de la bague d'assemblage **54** dans la position de coincement.

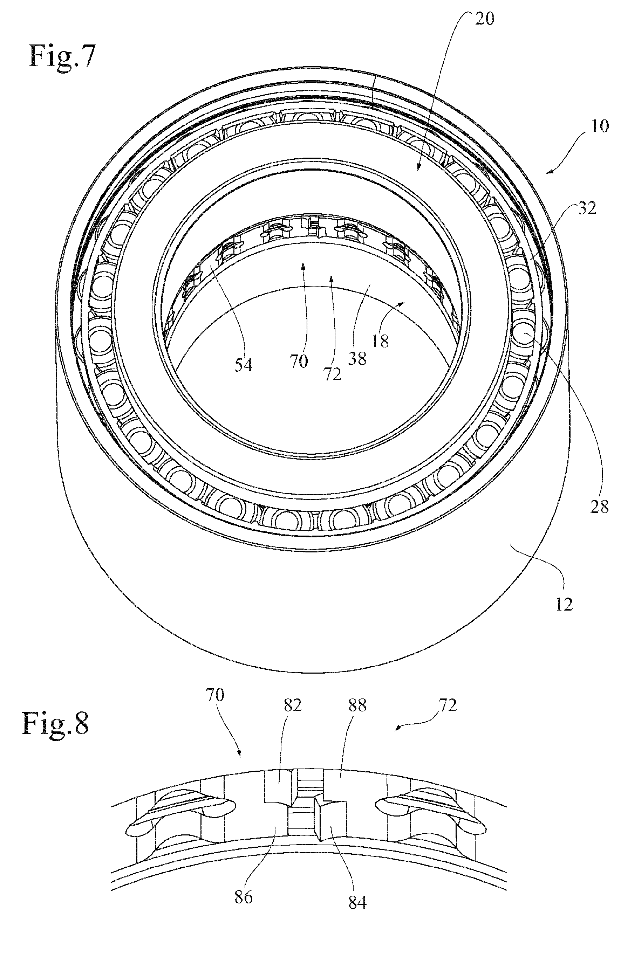

Une autre variante de réalisation des portions d'extrémité **70, 72** est illustrée sur les figures **7** et **8****.** Chaque portion d'extrémité **70, 72** comporte ici une partie pliée radialement vers l'intérieur **82, 84** qui, lorsque les portions d'extrémité **70, 72** se rapprochent l'une de l'autre, vient en appui, par une facette tournée radialement vers l'extérieur, avec une partie non pliée **88, 86** de l'autre portion d'extrémité **72, 70,** assurant comme dans les autres modes de réalisation un verrouillage mutuel des deux portions d'extrémité **70, 72.**

Naturellement, les exemples représentés sur les figures et discutés ci-dessus ne sont donnés qu'à titre illustratif et non limitatif. Les épaulements **66, 68** formés sur la bague d'assemblage **54** peuvent être réalisés par tout moyen approprié. On peut notamment envisager, en lieu et place des trous oblongs **58,** des parties pleines embouties. On peut également réaliser les épaulements **66, 68** par découpe de languettes faisant saillie radialement vers l'extérieur, auquel cas les parties bombées **56** ne sont plus nécessaires.

La bague d'assemblage **54** selon l'invention peut être associée à tout type de bague intérieure de palier à roulement, notamment à billes à contact cylindrique ou oblique à un ou plusieurs points de contact, à rouleaux coniques, cylindriques ou bombés, ou à aiguilles, sans que cette liste ait un caractère limitatif. Elle peut également être associée à tout type de bague intérieure de palier lisse. Le nombre de chemins de guidage par bague peut être supérieur à un. Les bagues intérieures peuvent être disposées en contact direct l'une avec l'autre par leurs faces transversales d'extrémité, qui peuvent le cas échéant présenter des reliefs ou une forme tronconique. Alternativement, une entretoise peut être interposée entre les deux bagues intérieures. On peut également assembler avec une ou plusieurs bagues d'assemblage selon l'invention plus de deux bagues intérieures. Par exemple, on peut assembler trois bagues intérieures de palier de guidage, soit en utilisant deux bagues d'assemblage, chacune entre deux des trois bagues intérieures à assembler, soit en utilisant une bague d'assemblage unique, qui relie les deux bagues intérieures d'extrémité en enjambant la bague intérieure médiane.

Il est explicitement prévu que toutes les caractéristiques, telles qu'elles se dégagent pour un homme du métier à partir de la présente description, des dessins et plus généralement de l'exposé de l'invention, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques exposés ici, pour autant que cela n'a pas été expressément exclu ou que des circonstances techniques rendent de telles combinaisons impossibles ou dénuées de sens.

## Revendications

1. Bague d'assemblage ouverte (54) constituée par une bande de matière élastiquement déformable enroulée autour d'un axe de référence (100), et formant au moins un premier épaulement (66) situé dans un premier plan géométrique (102) perpendiculaire à l'axe de référence (100) et tourné dans une première direction axiale, un deuxième épaulement (68) situé dans un deuxième plan géométrique (104) parallèle au premier plan géométrique (102) et distant du premier plan géométrique (102), le deuxième épaulement (68) étant tourné dans une deuxième direction axiale opposée à la première direction axiale, la bague d'assemblage (54) comportant deux portions d'extrémité (70, 72) en regard l'une de l'autre, la bague d'assemblage (54) étant déformable élastiquement par mouvement plan parallèle au premier plan géométrique au moins d'une position nominale d'assemblage à une position de coincement par rapprochement des deux portions d'extrémité (70, 72) induisant une diminution d'un diamètre apparent de la bague d'assemblage (54), **caractérisée en ce que** chaque portion d'extrémité (70, 72) comporte des formes de verrouillage (74, 76, 78, 80, 82, 84) telles que lorsque la bague d'assemblage (54) passe de la position nominale d'assemblage à la position de coincement, les portions d'extrémité (70, 72) se rapprochent l'une de l'autre jusqu'à venir se coincer mutuellement dans la position de coincement de manière à empêcher une réduction du diamètre apparent de la bague d'assemblage (54) en deçà d'un diamètre de sécurité prédéterminé.

2. Bague d'assemblage (54) selon la revendication 1, **caractérisée en ce que** les deux portions d'extrémité (70, 72) comportent un ou plusieurs premiers jeux de surfaces de guidage (74, 80) tendant à guider une première (70) des deux portions d'extrémité radialement vers l'extérieur et la deuxième (72) des deux portions d'extrémité radialement vers l'intérieur lorsque les deux portions d'extrémité (70, 72) sont sollicitées vers la position de coincement et un ou plusieurs deuxièmes jeux de surfaces de guidage (78, 76) tendant à guider la première (70) des deux portions d'extrémité radialement vers l'intérieur et la deuxième (72) des deux portions d'extrémité radialement vers l'extérieur lorsque les deux portions d'extrémité (70, 72) sont sollicitées vers la position de coincement.

3. Bague d'assemblage (54) selon la revendication 2, **caractérisée en ce que** chaque portion d'extrémité (70, 72) comporte un premier nombre des premier jeux de surfaces de guidage (74, 80), et un deuxième nombre des deuxièmes jeux de surfaces de guidage (78, 76), la somme du premier nombre et du deuxième nombre étant impaire.

4. Bague d'assemblage (54) selon la revendication 2 ou la revendication 3, **caractérisée en ce que** le ou les premiers et le ou les deuxièmes jeux de surfaces de guidage comportent des faces en biseau (74, 76, 78, 80).

5. Bague d'assemblage (54) selon l'une quelconque des revendications 2 à 4, **caractérisée en ce que** le ou les premiers et le ou les deuxièmes jeux de faces de guidage comportent des parties pliées (82, 84) des première et deuxième portions d'extrémité (70, 72).

6. Bague d'assemblage (54) selon l'une quelconque des revendications précédentes, **caractérisée en ce que** la bague d'assemblage (54) est déformable élastiquement au moins de la position nominale d'assemblage à une position de montage par déplacement d'une des deux portions d'extrémité (72) radialement vers l'intérieur par rapport à l'autre (70) des deux portions d'extrémité, la bague d'assemblage (54) ayant dans la position de montage un diamètre apparent inférieur au diamètre de sécurité.

7. Bague d'assemblage (54) selon la revendication 6, **caractérisée en ce que** la bague d'assemblage (54) est déformable élastiquement de la position nominale d'assemblage à la position de montage par un mouvement plan parallèle au premier plan de référence (102).

8. Palier de guidage tournant (10) comportant deux bagues intérieures (18, 20) disposées bout à bout et présentant chacune au moins un chemin de guidage (22, 24) annulaire tourné radialement vers l'extérieur et une paroi d'épaulement (50, 52), **caractérisé par** une bague d'assemblage (54) selon l'une quelconque des revendications précédentes, disposée de manière à ce que les parois d'épaulement (50, 52) soient situées entre les épaulements (66, 68), chacune axialement directement en regard de l'un des épaulements (66, 68), dans la position nominale d'assemblage et dans la position de coincement.

9. Palier de guidage tournant (10) selon la revendication 8, **caractérisé en ce que** les épaulements (66, 68) sont axialement en interférence élastique avec les parois d'épaulement (50, 52) ou présentent un jeu axial avec les parois d'épaulement (50, 52), le jeu axial étant suffisamment faible pour que les parois d'épaulement (50, 52) guident le mouvement plan de la bague d'assemblage (54) parallèle au premier plan géométrique de la position nominale d'assemblage à la position de coincement.

10. Palier de guidage tournant (10) selon la revendication 8 ou la revendication 9, **caractérisé en ce que** chacune des bagues intérieures (18, 20) comporte une gorge d'assemblage (42, 44) tournée radialement vers l'intérieur et formant une des parois d'épaulement (50, 52).

11. Palier de guidage tournant (10) selon la revendication 10, **caractérisé en ce que** au moins une des deux bagues intérieures (18, 20) présente une portée intérieure cylindrique (38, 40) ayant un diamètre inférieur à un diamètre intérieur de la bague d'assemblage (54) insérée dans la gorge d'assemblage (42, 44) de chacune des deux bagues intérieures (18, 20).

12. Palier de guidage tournant (10) selon l'une quelconque des revendications 8 à 11, **caractérisé par** une bague extérieure (12) de guidage comportant au moins deux chemins de guidage (14, 16) tournés radialement vers l'intérieur, l'un des deux chemins de guidage (14, 16) de la bague extérieure (12) étant associé à l'une des deux bagues intérieures (18, 20) et situé en regard du chemin de guidage (22, 24) de la bague intérieure associée (18, 20), l'autre des deux chemins de guidage (14, 16) de la bague extérieure (12) étant associé à l'autre des deux bagues intérieures (18, 20) et situé en regard du chemin de guidage (22, 24) de la bague intérieure associée (18, 20).

13. Palier de guidage (10) tournant selon l'une quelconque des revendications 8 à 12, **caractérisé en ce que** le chemin de guidage annulaire (22, 24) de chacune des deux bagues intérieures (18, 20) est un chemin de roulement sur lequel roulent des corps roulants (26, 28) du palier de guidage (10).
